# FASCICULE DE BREVET EUROPEEN

(11) **EP 4 144 599 B1**
(45) Date de publication et mention de la délivrance du brevet: **20.11.2024**
(21) Numéro de dépôt: 22191778.4
(22) Date de dépôt: 23.08.2022
(51) Int. Cl.: B60S 1/40, B60S 1/04, B60S 1/38

(54) **ADAPTATEUR D'UN SYSTÈME D ESSUYAGE**
ADAPTER FÜR REINIGUNGSSYSTEM
ADAPTER FOR A WIPING SYSTEM

(30) Priorité: 01.09.2021 FR 2109138
(43) Date de publication de la demande: 08.03.2023
(73) Titulaire: Valeo Systèmes d'Essuyage, 78322 Le Mesnil Saint Denis (FR)
(72) Inventeur: GAUCHER, Vincent, 78321 LE MESNIL SAINT DENIS (FR); HOUSSAT, Stephane, 78321 LE MESNIL SAINT DENIS (FR); POTON, Eric, 78321 LE MESNIL SAINT DENIS (FR); JOMARD, Olivier, 78321 LE MESNIL SAINT DENIS (FR)
(74) Mandataire: Valeo Visibility

(56) Documents cités:
- WO-A1-2015/052580
- WO-A1-2020/125975
- DE-A1- 102016 211 162
- DE-B- 1 199 640
- FR-A1- 2 781 741

## Description

Le domaine de la présente invention est celui des systèmes d'essuyage destinés aux véhicules automobiles. Plus particulièrement, le domaine de la présente invention est celui des adaptateurs disposés entre un bras d'essuie-glace et un balai d'essuyage de tels systèmes d'essuyage.

Les véhicules automobiles sont couramment équipés de systèmes d'essuyage destinés à nettoyer leurs surfaces vitrées, et notamment leur pare-brise. De tels systèmes d'essuyage comprennent au moins un bras d'essuie-glace et un balai d'essuyage entrainé par le bras d'essuie-glace. Le bras d'essuie-glace est relié à un moteur électrique du véhicule et le balai d'essuyage comprend au moins une lame d'essuyage adaptée pour venir au contact de la surface vitrée à essuyer. Afin de pouvoir entraîner le balai d'essuyage, un adaptateur est agencé entre ce balai d'essuyage et le bras d'essuie-glace. Plus particulièrement, l'adaptateur est agencé entre le bras d'essuie-glace et un connecteur relié au balai d'essuyage. L'adaptateur est alors solidaire du bras d'essuie-glace et plus particulièrement d'une extrémité libre du bras d'essuie-glace, une telle coopération étant amovible de telle sorte qu'elle permet de changer le balai d'essuyage lorsque celui-ci est usé.

Afin de rendre optimal le nettoyage des surfaces vitrées des véhicules, au moyen des systèmes d'essuyage, il est nécessaire que lesdits systèmes d'essuyage et notamment leurs balais d'essuyage soient plaqués contre la surface vitrée à nettoyer. Aussi, des moyens participant au plaquage des balais d'essuyage sont connus, tel que des déflecteurs disposés sur les balais d'essuyage et assurant, lors du roulage du véhicule, le plaquage des balais d'essuyage sous l'effet d'un flux d'air. Cependant, le plaquage des balais d'essuyage, bien qu'il soit efficace, n'est pas optimal et peut dès lors être amélioré.

Par ailleurs, le montage et/ou le démontage de balai d'essuyage sur le bras n'est également pas optimal. En effet, l'actionnement du dispositif de verrouillage sans un minimum de précautions peut entraîner sa casse ou des dommages irréversibles, limitant dès lors son utilisation.

Le but de l'invention est donc d'améliorer de manière simple le plaquage des balais d'essuyage contre les surfaces vitrées, tout en permettant un montage et/ou un démontage du balai d'essuyage sans entraîner la destruction d'un élément du balai d'essuyage. Le plaquage des balais d'essuyage est formé notamment en générant une zone de dépression à l'arrière des adaptateurs, suivant un sens de circulation du flux d'air contre le système d'essuyage, améliorant ainsi les performances globales du système d'essuyage.

Un exemple d'adaptateur pour la fixation d'un balai d'essuyage à un bras d'un système d'essuyage est décrit dans le document WO2020125975A1.

L'invention a pour principal objet un adaptateur pour la fixation d'un balai d'essuyage à un bras d'un système d'essuyage, l'adaptateur s'étendant le long d'une direction longitudinale, l'adaptateur étant configuré pour être monté rotatif sur un connecteur d'un balai d'essuyage autour d'un axe de rotation transversal à la direction longitudinale, l'adaptateur comprenant au moins une paroi latérale et une paroi supérieure, la paroi latérale et la paroi supérieure participant à définir un volume interne de l'adaptateur, l'adaptateur comprenant une paroi interne s'étendant au moins en partie dans le volume interne de l'adaptateur, l'adaptateur comprenant un dispositif de verrouillage destiné à solidariser longitudinalement l'adaptateur par rapport au bras du système d'essuyage, le dispositif de verrouillage étant monté pivotant sur la paroi supérieure autour d'un axe de pivotement, le dispositif de verrouillage comprenant au moins un organe de poussée et un organe de blocage, l'organe de poussée s'inscrivant dans un profil de la paroi supérieure tandis que l'organe de blocage s'étend au moins en partie dans un logement de réception destiné à recevoir le bras caractérisé en ce que le dispositif de verrouillage comprend un moyen de limitation de son pivotement qui vient en appui contre la paroi interne.

Le balai d'essuyage et le bras font partie d'un système d'essuyage d'un véhicule destiné à nettoyer au moins en partie une surface vitrée dudit véhicule. Le système d'essuyage comprend alors le bras entrainé en rotation par un moteur électrique du véhicule et assurant le mouvement de rotation du balai d'essuyage, auquel il est solidaire via l'adaptateur et le connecteur, contre la surface vitrée afin que la lame portée par le balai d'essuyage débarrasse ladite surface vitrée des gouttes de pluie et/ou de débris solides, déposés sur cette dernière. Le dispositif de verrouillage participe par ailleurs à la fixation de l'adaptateur sur le bras, en bloquant la position de l'adaptateur sur le bras. Par son pivotement, le dispositif de verrouillage facilite le montage et/ou le démontage de l'adaptateur sur le bras en limitant la casse d'un élément constitutif de l'adaptateur et/ou du bras.

Le moyen de limitation du dispositif de verrouillage bloque le pivotement du dispositif de verrouillage dans au moins un sens de pivotement de ce dernier. On comprend ici que le moyen de limitation permet notamment, par exemple au moyen d'une butée, d'empêcher le dispositif de verrouillage de pivoter selon un angle trop important, et limite ainsi le risque de casse d'un élément constitutif de l'adaptateur et/ou du bras.

Selon l'invention, le pivotement du dispositif de verrouillage est limité par la butée du moyen de limitation contre la paroi interne de l'adaptateur.

Selon une caractéristique optionnelle de l'invention, l'axe de pivotement est parallèle à la direction longitudinale.

Selon une caractéristique optionnelle de l'invention, la paroi latérale et la paroi supérieure présentent chacune un bord libre et un bord commun à la paroi latérale et à la paroi supérieure, l'adaptateur présentant une section triangulaire vue dans un plan perpendiculaire à la direction longitudinale et définie par le bord libre de la paroi latérale, le bord libre de la paroi supérieure et par le bord commun entre la paroi latérale et de la paroi supérieure, la paroi supérieure étant courbée entre le bord commun et son bord libre vue dans le plan perpendiculaire à la direction longitudinale.

De plus, le bord libre de la paroi supérieure correspond au bord disposé en travers du flux d'air lorsque le système d'essuyage est disposé sur le véhicule, le flux d'air léchant la paroi supérieure. En d'autres termes, le bord libre de la paroi supérieure est le bord le plus en avant du véhicule lorsque le système d'essuyage est monté sur ledit véhicule. On comprend ainsi que le bord libre de la paroi latérale et la paroi latérale en elle-même sont disposés à l'arrière du système d'essuyage, entre la surface vitrée et le bord libre de la paroi supérieure suivant une trajectoire du flux d'air, lorsque le système d'essuyage est monté sur le véhicule.

Selon une autre caractéristique optionnelle de l'invention, la courbe de la paroi supérieure entre le bord commun et son bord libre vue dans le plan perpendiculaire à la direction longitudinale s'inscrit dans un cercle.

Selon une autre caractéristique optionnelle de l'invention, la paroi interne participe à délimiter au moins en partie une zone de réception destinée à recevoir le connecteur. On comprend que la zone de réception est délimitée au moins par la paroi interne, mais que d'autres parois peuvent contribuer à délimiter cette zone de réception. On comprend ici que le connecteur, une fois monté sur l'adaptateur, est disposé au moins en partie dans la zone de réception de l'adaptateur.

Selon une caractéristique optionnelle de l'invention, la paroi interne présente une face de contact en regard du moyen de limitation et une face de guidage participant à délimiter la zone de réception, le moyen de limitation venant en appui contre la face de contact de la paroi interne.

Selon l'invention, on comprend que l'organe de poussée s'étend en épousant la forme de la paroi supérieure, l'organe de poussée affleurant par exemple la paroi supérieure. L'organe de poussée est par ailleurs l'organe du dispositif de verrouillage sur lequel un utilisateur exerce une force pour permettre au dispositif de verrouillage de pivoter.

De plus, l'organe de blocage est l'organe du dispositif de verrouillage configuré pour être en contact avec le bras, solidarisant et/ou désolidarisant l'adaptateur du bras.

Selon une autre caractéristique optionnelle de l'invention, le dispositif de verrouillage comprend au moins une charnière reliant l'organe de poussée à la paroi supérieure, l'organe de poussée étant entouré par une rainure le séparant de la paroi supérieure. La charnière d'une part d'autorise le pivotement du dispositif de verrouillage autour de l'axe de pivotement, et d'autre part rend solidaire le dispositif de verrouillage de la paroi supérieure.

Selon une autre caractéristique optionnelle de l'invention, l'organe de poussée prend une forme parallélépipédique, l'organe de poussée présentant au moins un côté supérieur et un côté inférieur s'étendant parallèlement à la direction longitudinale, la charnière étant disposée entre le côté inférieur de l'organe de poussée et la paroi supérieure, la rainure s'étendant sur les trois autres côtés de l'organe de poussée.

On comprend ici que le côté supérieur est le côté de l'organe de poussée le plus proche du bord commun entre la paroi latérale et la paroi supérieure et que le côté inférieur est le côté de l'organe de poussée le plus proche du bord libre de la paroi supérieure.

Par cette disposition particulièrement astucieuse, le pivotement de l'organe de verrouillage permet de disposer et/ou de retirer l'organe de blocage du logement de réception, solidarisant et/ou désolidarisant l'adaptateur du bras.

Selon une autre caractéristique optionnelle de l'invention, l'organe de poussée présente un profil courbé vu dans une coupe perpendiculaire à la direction longitudinale, le profil courbé de l'organe de poussée s'inscrivant dans un profil de la paroi supérieure.

Selon une autre caractéristique optionnelle de l'invention, l'organe de poussée comprend une face externe orientée vers l'environnement extérieur de l'adaptateur et une face interne orientée vers le volume interne de l'adaptateur, l'organe de poussée présentant sur sa face externe un motif favorisant l'adhérence. Ce motif est par exemple un grainage de la face externe de la paroi supérieure.

Selon une autre caractéristique optionnelle de l'invention, le moyen de limitation fait partie de l'organe de blocage. En d'autres termes, le moyen de limitation et l'organe de blocage forment un ensemble monobloc, c'est-à-dire que le moyen de limitation et l'organe de blocage ne peuvent être séparés l'un de l'autre sans entraîner la destruction du moyen de limitation et/ou de l'organe de blocage.

Selon une autre caractéristique optionnelle de l'invention, l'organe de blocage est délimité longitudinalement par une face terminale du moyen de limitation. On comprend par « face terminale » une face disposée à une extrémité longitudinale du moyen de limitation.

Selon une autre caractéristique optionnelle de l'invention, le moyen de limitation est formé par une face de butée sécante à la face terminale et en regard de la paroi interne. Plus précisément, la face de butée s'étend dans un plan sécant au plan dans lequel s'étend la face terminale du moyen de limitation.

Selon une autre caractéristique optionnelle de l'invention, le dispositif de verrouillage pivote autour de l'axe de pivotement selon un angle maximum de 20°.

Préférentiellement, l'angle de pivotement du dispositif de verrouillage est au maximum de 15°.

Encore plus préférentiellement, l'angle de pivotement du dispositif de verrouillage est au maximum de 10°.

Selon une autre caractéristique optionnelle de l'invention, l'organe de blocage s'étend depuis l'organe de poussée vers le logement de réception, l'organe de blocage comprenant une portion coudée et une extrémité libre disposée dans le logement de réception lorsque l'organe de verrouillage est dans une position de verrouillage de l'adaptateur sur le bras.

Selon une autre caractéristique optionnelle de l'invention, le moyen de limitation prolonge longitudinalement l'extrémité libre de l'organe de blocage.

Selon une autre caractéristique optionnelle de l'invention, l'adaptateur comprend au moins un renfort s'étendant entre la paroi interne et la paroi latérale et/ou la paroi supérieure. Le renfort comprend notamment une paroi s'étendant principalement, par exemple, dans un plan sensiblement perpendiculaire à la direction longitudinale. Le renfort permet de renforcer la structure de l'adaptateur, et d'augmenter sa rigidité.

Selon une autre caractéristique optionnelle de l'invention, le renfort comprend une ouverture participant à délimiter au moins en partie le logement de réception. On comprend que l'ouverture est destinée à recevoir au moins une partie du bras.

Selon une autre caractéristique optionnelle de l'invention, le logement de réception est décalé latéralement par rapport à la zone de réception.

Selon une autre caractéristique optionnelle de l'invention, le logement de réception est plus proche de la paroi latérale que la zone de réception. En d'autres termes, le logement de réception est disposé entre la zone de réception et la paroi latérale.

Selon une autre caractéristique optionnelle de l'invention, le logement de réception s'étend dans un plan d'extension principale parallèle à la direction longitudinale, le plan d'extension principale étant vu dans une position médiane dudit logement de réception, le plan d'extension principale du logement de réception coupant la zone de réception.

Selon une autre caractéristique optionnelle de l'invention, la paroi supérieure comprend au moins un dispositif de perturbation aéraulique s'étendant le long de la direction longitudinale et est ouverte sur l'extérieur de l'adaptateur.

Selon une autre caractéristique optionnelle de l'invention, le dispositif de perturbation aéraulique prend la forme d'une gorge.

Selon une autre caractéristique optionnelle de l'invention, le dispositif de perturbation aéraulique prend la forme d'une nervure.

Par ailleurs, l'invention a également pour objet un dispositif de connexion pour un balai d'essuyage comprenant au moins un connecteur et un adaptateur selon l'une quelconque des caractéristiques précédentes, le connecteur étant montée en rotation autour de l'axe de rotation au moyen d'un dispositif de rotation.

L'invention concerne de plus un balai d'essuyage comprenant au moins un dispositif de connexion selon la caractéristique précédente ou un adaptateur selon l'une quelconque des caractéristiques précédentes.

L'invention a enfin pour objet un système d'essuyage comprenant au moins un bras et un balai d'essuyage selon la caractéristique précédente, le bras comprenant au moins une tige se logeant dans le logement de réception de l'adaptateur. On comprend ici par « tige » un élément plein et allongé présentant par exemple une section rectangulaire ou discoïde, vue dans un plan perpendiculaire à une direction d'allongement principal de la tige.

Selon une autre caractéristique optionnelle de l'invention, au moins une extrémité de la tige prend une forme complémentaire au logement de réception de l'adaptateur, la tige présentant une encoche coopérant avec le dispositif de verrouillage pour bloquer longitudinalement la position de l'adaptateur sur la tige.

D'autres caractéristiques, détails et avantages de l'invention ressortiront plus clairement à la lecture de la description qui suit d'une part, et de plusieurs exemples de réalisation donnés à titre indicatif et non limitatif en référence aux dessins schématiques annexés d'autre part, sur lesquels :
[Fig. 1] est une vue en perspective d'un système d'essuyage comprenant au moins un bras, un balai d'essuyage et un adaptateur selon l'invention ;
[Fig. 2] est une vue en perspective de dessus de l'adaptateur représenté sur la figure 1 ;
[Fig. 3] est une vue en perspective de dessous de l'adaptateur représenté sur la figure 1 ;
[Fig. 4] est une vue en perspective de dessous de l'adaptateur et du bras représentés sur la figure 1 ;
[Fig. 5] est une coupe transversale de l'adaptateur représenté sur la figure 1 ;
[Fig. 6] est une autre coupe transversale de l'adaptateur représenté sur la figure 1.

Les caractéristiques, variantes et les différentes formes de réalisation de l'invention peuvent être associées les unes avec les autres, selon diverses combinaisons, dans la mesure où elles ne sont pas incompatibles ou exclusives les unes par rapport aux autres. On pourra notamment imaginer des variantes de l'invention ne comprenant qu'une sélection de caractéristiques décrites par la suite de manière isolée des autres caractéristiques décrites, si cette sélection de caractéristiques est suffisante pour conférer un avantage technique et/ou pour différencier l'invention par rapport à l'état de la technique antérieur.

Sur les figures, les éléments communs à plusieurs figures conservent la même référence.

Dans la description détaillée qui va suivre, les dénominations « longitudinale », « transversale » et « verticale » se réfèrent à l'orientation d'un système d'essuyage selon l'invention. Une direction longitudinale correspond à une direction principale d'allongement d'un adaptateur selon l'invention, cette direction longitudinale étant parallèle à un axe longitudinal L d'un L, V, T illustré sur les figures. Une direction transversale correspond à une direction le long de laquelle un renfort s'étend principalement, cette direction transversale étant parallèle à un axe transversal T du repère L, V, T et cet axe transversal T étant perpendiculaire à l'axe longitudinal L. Enfin, une direction verticale correspond à une direction parallèle à un axe vertical V du repère L, V, T, cet axe vertical V étant perpendiculaire à l'axe longitudinal L et l'axe transversal T.

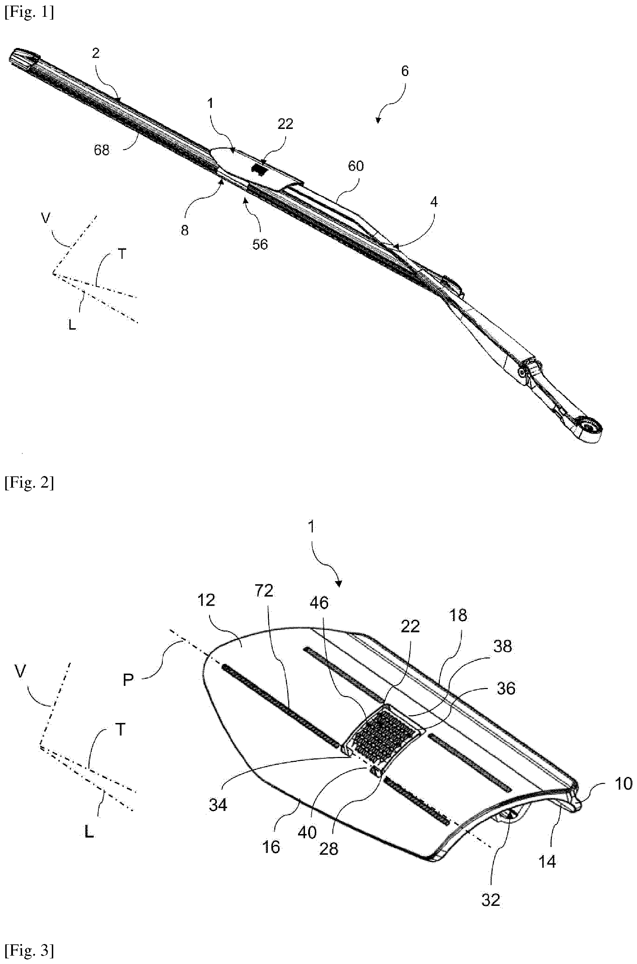

La figure 1 illustre un système d'essuyage 6 configuré pour assurer le nettoyage d'une surface vitrée d'un véhicule, par exemple un parebrise, de manière à améliorer la visibilité qu'a un conducteur de la route située devant le véhicule, par exemple par temps de pluie ou encore pour débarrasser ladite surface vitrée de débris solides accrochés à cette dernière. Le système d'essuyage 6 s'étend principalement le long de la direction longitudinale L, et comprend au moins un bras 4 d'essuyage portant à une extrémité un balai d'essuyage 2 et étant reliée à une autre extrémité opposée selon la direction longitudinale L au véhicule.

Le bras 4 et le balai d'essuyage 2 s'étendent tous deux principalement suivant la direction longitudinale L du système d'essuyage 6. Le bras 4 comprend plus précisément un corps de liaison destiné à rendre solidaire le bras 4 du véhicule et une tige 60 s'étendant depuis le corps de liaison jusqu'à une extrémité du bras 4. On comprend par « tige » un élément plein et s'allongeant le long de la direction longitudinale L. La tige 60 présente ici une section rectangulaire, vue dans un plan perpendiculaire à la direction longitudinale L. Cependant, une tige 60 présentant une section discoïde, triangulaire ou autre ne sortirait pas pour autant du cadre de l'invention.

De plus, le balai d'essuyage 2 est notamment adapté pour être entrainé en rotation par le bras 4 contre la surface vitrée du véhicule, le bras 4 étant lui-même entrainé en rotation par un moteur, non visible, par exemple un moteur électrique porté par le véhicule.

Afin de relier le balai d'essuyage 2 à l'extrémité du bras 4, ledit balai d'essuyage 2 comprend un dispositif de connexion 56 comportant au moins un connecteur 8 qui porte une lame d'essuyage 68 du balai d'essuyage 2 et un adaptateur 1 monté en rotation sur le connecteur 8, l'adaptateur 1 étant apte à coopérer avec l'extrémité du bras 4. On comprend notamment que la lame d'essuyage 68 du balai d'essuyage 2 est destinée à être au contact de la surface vitrée du véhicule. Par ailleurs, le connecteur 8 est configuré pour porter la lame d'essuyage 68, directement ou indirectement.

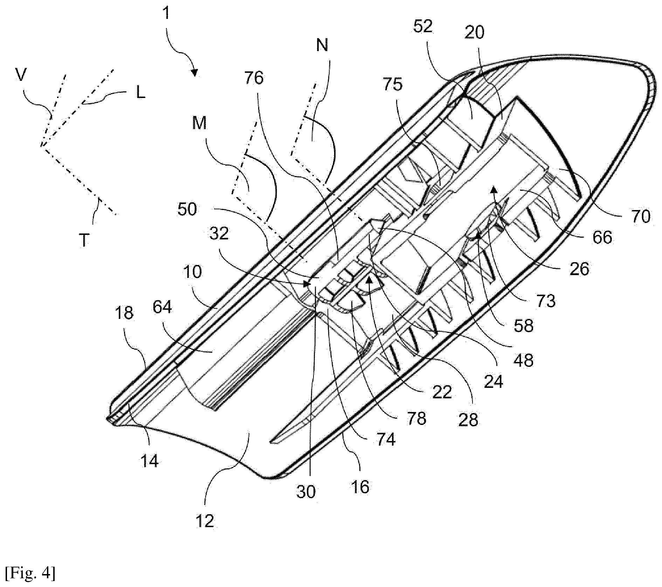

La rotation de l'adaptateur 1 et du connecteur 8 se fait au moyen d'un dispositif de rotation 58 (visible à la figure 3), cette rotation se faisant autour d'un axe de rotation R sensiblement parallèle à la direction transversale T. Une description plus détaillée du dispositif de rotation 58 sera faite dans la suite de la description.

Tel que plus particulièrement visible sur les figures 2 et 3, l'adaptateur 1 s'étend principalement le long de la direction longitudinale L. L'adaptateur 1 comprenant au moins une paroi latérale 10 et une paroi supérieure 12, la paroi latérale 10 et la paroi supérieure 12 présentant chacune un bord libre 14, 16 et un bord commun 18 à la paroi latérale 10 et à la paroi supérieure 12.

La paroi latérale 10 s'étend principalement dans un plan parallèle aux directions longitudinale L et verticale V. La paroi latérale 10 présente ici un bord libre 14 et un bord commun 18 avec la paroi supérieure 12, le bord commun 18 joignant la paroi latérale 10 et la paroi supérieure 12 s'étendant chacune dans des plans distincts.

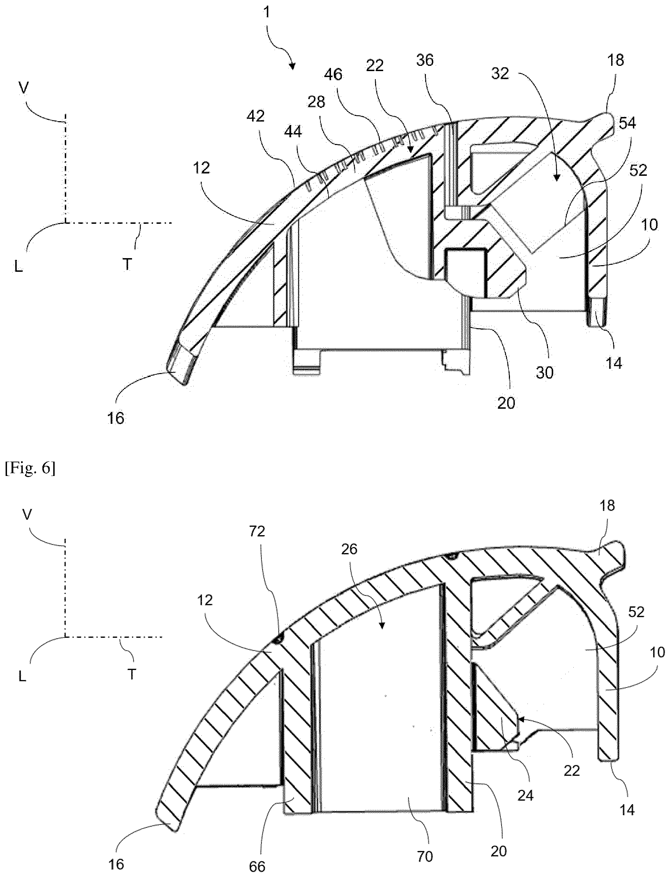

La paroi supérieure 12 présente également un bord libre 16, et s'étend entre son bord libre 16 et le bord commun 18 en présentant une courbe, tel que particulièrement visible sur la figure 5 qui est une coupe réalisée selon le plan de coupe M illustré sur la figure 3. On comprend ici que la paroi supérieure 12 présente un profil courbé entre le bord commun 18 et son bord libre 16 vue dans le plan perpendiculaire à la direction longitudinale L en s'inscrivant dans un cercle.

Dans cette configuration, l'adaptateur 1 présente une section triangulaire vue dans un plan perpendiculaire à la direction longitudinale L, le triangle de cette section étant définie par le bord libre 14 de la paroi latérale 10, le bord libre 16 de la paroi supérieure 12 et par le bord commun 18 entre la paroi latérale 10 et de la paroi supérieure 12. On peut ainsi définir un volume interne de l'adaptateur 1, ce volume interne étant au moins en partie délimité par la paroi latérale 10 et la paroi supérieure 12. Le volume interne s'étend principalement sous la forme d'un prisme droit de base triangulaire.

De plus, l'adaptateur 1 comprend une paroi interne 20 s'étendant au moins en partie dans le volume interne de l'adaptateur 1. Plus précisément, la paroi interne 20 s'étend dans un plan sensiblement parallèle aux directions longitudinale L et verticale V, depuis la paroi supérieure 12 dans le volume interne. On comprend que la paroi interne 20 s'étend sensiblement parallèlement à la paroi latérale 10.

Selon l'invention, la paroi interne 20 participe à délimiter au moins en partie une zone de réception 26 destinée à recevoir le connecteur 8. Le connecteur 8, lorsque l'adaptateur 1 est monté sur le connecteur 8, se loge au moins en partie dans la zone de réception 26.

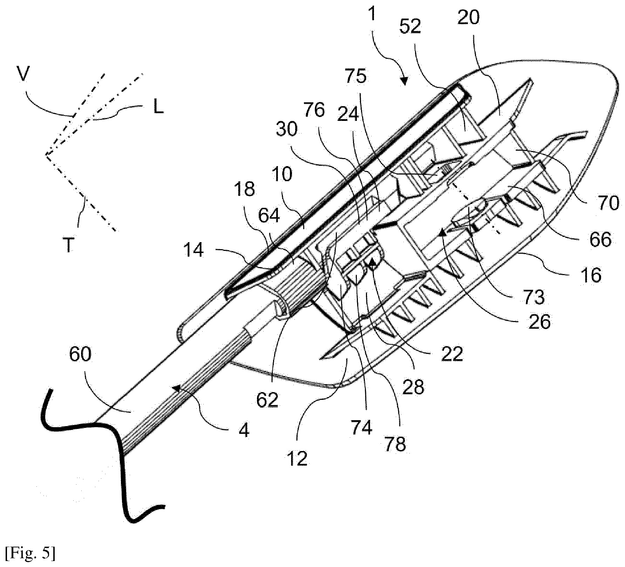

Par ailleurs, et tel que plus particulièrement visible sur les figures 3 et 4, l'adaptateur 1 comprend plusieurs parois participant à délimiter la zone de réception 26, dont notamment la paroi interne 20. Plus particulièrement, ces parois s'étendent en formant un rectangle, les parois s'étendant dans un plan sensiblement perpendiculaire aux plans dans lequel s'étendent les parois voisines. On comprend donc que l'adaptateur 1 comprend une paroi longitudinale 66 s'étendant parallèlement à la paroi interne 20, et deux parois latérales 70 s'étendant perpendiculairement aux parois longitudinale 66 et interne 20 et entre ces dernières.

De plus, le connecteur 8, une fois monté sur l'adaptateur 1, est disposé au moins en partie dans la zone de réception 26 de l'adaptateur 1. Autrement dit, le connecteur 8 est disposé au moins en partie entre la paroi interne 20 et la paroi longitudinale 66, et entre les parois latérales 70.

Comme mentionné auparavant, l'adaptateur 1 est monté en rotation sur le connecteur 8 au moyen d'un dispositif de rotation 58. Ce dernier comprend plusieurs éléments coopérant les uns avec les autres et disposés d'une part sur le connecteur 8 et d'autre part sur l'adaptateur 1.

Par exemple, et comme visible sur les figures 3 et 4, l'adaptateur 1 comprend d'une part un élément mâle 73 sur la paroi longitudinale 66 configuré pour coopérer avec un élément femelle du connecteur 8, et d'autre part un élément femelle 75 destiné à coopérer avec un élément mâle du connecteur 8.

Plus précisément, les éléments mâles prennent la forme d'une languette portant un toron, et les éléments femelles prennent la forme d'un orifice dans lequel le toron est destiné à être entraîné en rotation autour de l'axe de rotation R. La languette de l'adaptateur 1 s'étend, par exemple, dans un plan confondu avec le plan dans lequel s'étend la paroi longitudinale 66, et est délimitée de ladite paroi longitudinale 66 par au moins une rainure et avantageusement deux rainures s'étendant le long de la direction verticale V. Dans cette configuration, la languette est élastiquement déformable en étant mobile autour d'une direction de rotation parallèle à la direction longitudinale L de sorte à permettre le montage de l'adaptateur 1 sur le connecteur 8.

Selon l'invention, et tel qu'illustré sur les figures 3 à 5, l'adaptateur 1 comprend un dispositif de verrouillage 22 destiné à solidariser longitudinalement l'adaptateur 1 par rapport au bras 4 du système d'essuyage 6, le dispositif de verrouillage 22 étant monté pivotant sur la paroi supérieure 12 autour d'un axe de pivotement P, le dispositif de verrouillage 22 comprenant un moyen de limitation 24 de son pivotement qui vient en appui contre la paroi interne 20.

Plus particulièrement, le dispositif de verrouillage 22 comprend au moins un organe de poussée 28 et un organe de blocage 30, l'organe de poussée 28 s'inscrivant dans un profil de la paroi supérieure 12 tandis que l'organe de blocage 30 s'étend au moins en partie dans un logement de réception 32 destiné à recevoir le bras 4. Une description plus détaillée du logement de réception 32 sera réalisée à la suite de la description du dispositif de verrouillage 22.

L'organe de poussée 28, tel qu'illustré sur les figures 2 à 5, s'étend en épousant la forme de la paroi supérieure 12, l'organe de poussée 28 affleurant la paroi supérieure 12. L'organe de poussée 28 est par ailleurs l'organe du dispositif de verrouillage 22 sur lequel un utilisateur exerce une force pour permettre au dispositif de verrouillage 22 de pivoter autour de l'axe de pivotement P.

Selon l'invention, l'organe de poussée 28 présente un profil courbé vu dans une coupe perpendiculaire à la direction longitudinale L, le profil courbé de l'organe de poussée 28 s'inscrivant dans un profil de la paroi supérieure 12. On comprend ici que la paroi supérieure 12 et l'organe de poussée 28 présentent chacun un profil courbé s'inscrivant dans le même cercle.

L'organe de poussée 28 est entouré par une rainure 36 le séparant de la paroi supérieure 12. On comprend que la rainure 36 traverse de part et d'autre la paroi supérieure 12 en délimitant l'organe de poussée 28. La rainure 36 prend ici une forme rectangulaire.

Vu de dessus, l'organe de poussée 28 prend également globalement une forme parallélépipédique, l'organe de poussée 28 présentant au moins un côté supérieur 38 et un côté inférieur 40 s'étendant parallèlement à la direction longitudinale L, et deux côtés transversaux s'étendant perpendiculairement aux côtés supérieur 38 et inférieur 40 et sensiblement parallèlement à la direction transversale T. Plus précisément, le côté supérieur 38 de l'organe de poussée 28 est disposé plus proche du bord commun 18 entre la paroi latérale 10 et la paroi supérieure 12 que du bord libre 16 de la paroi supérieure 12, alors que le côté inférieur 40 est disposé plus proche du bord libre 16 de la paroi supérieure 12 que du bord commun 18 entre la paroi latérale 10 et la paroi supérieure 12.

Par ailleurs, le dispositif de verrouillage 22 comprend au moins une charnière 34 reliant l'organe de poussée 28 à la paroi supérieure 12 permettant le pivotement du dispositif de verrouillage 22. La charnière 34 est disposée entre le côté inférieur 40 de l'organe de poussée 28 et la paroi supérieure 12, la rainure 36 s'étendant principalement sur les trois autres côtés de l'organe de poussée 28. La charnière 34 prend ici la forme d'un pont entre l'organe de poussée 28 et la paroi supérieure 12, ces trois éléments formant ainsi un élément monobloc, c'est-à-dire que la séparation de l'un des éléments ne peut être faite sans entraîner la destruction de l'un ou plus des trois éléments.

Tel qu'illustré ici sur la figure 2, la rainure 36 s'étend ici partiellement entre le côté inférieur 40 de l'organe de poussée 28 et la paroi supérieure 12, optimisant le pivotement de l'organe de poussée 28.

De plus, l'organe de poussée 28 présente une face externe 42 orientée vers l'environnement extérieur de l'adaptateur 1 et une face interne 44 orientée vers le volume interne de l'adaptateur 1, l'organe de poussée 28 présentant sur sa face externe 42 un motif 46 favorisant l'adhérence. On comprend qu'un utilisateur utilisant l'organe de poussée 28 aura une adhérence optimisée grâce à la présence de ce motif 46.

Ce motif 46 est, par exemple, un grainage de la face externe 42 de l'organe de poussée 28. Cependant, un organe de poussée 28 comprenant un autre motif 46 ne sortirait pas du cadre de l'invention.

Par ailleurs, la paroi supérieure 12 comprend également au moins un dispositif de perturbation aéraulique 72 s'étendant le long de la direction longitudinale L et est ouverte sur l'extérieur de l'adaptateur 1.

Selon l'exemple illustré ici sur la figure 2, le dispositif de perturbation aéraulique 72 prend la forme d'une gorge.

Selon un exemple alternatif de l'invention, le dispositif de perturbation aéraulique 72 prend la forme d'une nervure.

L'organe de blocage 30 quant à lui est l'organe du dispositif de verrouillage 22 configuré pour être en contact avec le bras 4, solidarisant et/ou désolidarisant l'adaptateur 1 du bras 4. On comprend que c'est l'organe qui interagit avec le bras 4 pour fixer l'adaptateur 1 sur ledit bras 4.

Tel que plus particulièrement visible sur la figure 5, l'organe de blocage 30 s'étend depuis l'organe de poussée 28 vers le logement de réception 32, l'organe de blocage 30 comprenant une portion coudée 74 et une extrémité libre 76 disposée dans le logement de réception 32 lorsque l'organe de verrouillage est dans une position de verrouillage de l'adaptateur 1 sur le bras 4.

On comprend ici que la portion coudée 74 d'une part comprend une première partie s'étendant depuis l'organe de poussée 28 dans un premier plan et d'autre part une deuxième partie s'étendant dans un deuxième plan sécant au premier plan vers l'extrémité libre 76, la portion coudée 74 comprenant une partie de liaison reliant la première partie à la deuxième partie. Par exemple, le premier plan est parallèle aux directions longitudinale L et verticale V, le deuxième plan s'étendant parallèlement aux directions longitudinale L et transversale T. De plus, la portion coudée 74 peut comprendre au moins une paroi de soutien 78 optimisant la rigidité de la portion coudée 74.

L'extrémité libre 76 quant à elle prend la forme d'un arbre s'étendant principalement le long de la direction longitudinale L.

Selon l'invention, le moyen de limitation 24 fait partie de l'organe de blocage 30. Plus particulièrement, le moyen de limitation 24 et l'organe de blocage 30 forment un ensemble monobloc, c'est-à-dire que le moyen de limitation 24 et l'organe de blocage 30 ne peuvent être séparés l'un de l'autre sans entraîner la destruction du moyen de limitation 24 et/ou de l'organe de blocage 30. Le moyen de limitation 24 prolonge ici longitudinalement l'extrémité libre 76 vers la zone de réception 26. En d'autres termes, l'extrémité libre 76 comprend une excroissance prolongeant longitudinalement l'arbre formant l'extrémité libre 76 vers la zone de réception 26, l'excroissance faisant office de moyen de limitation 24.

Le moyen de limitation 24 présente ici une face terminale 48 parallèle aux directions transversale T et verticale V et une face de butée 50 sécante à la face terminale 48 et en regard de la paroi interne 20. On peut également comprendre que l'organe de blocage 30 est délimité longitudinalement par la face terminale 48 du moyen de limitation 24.

Par ailleurs, la paroi interne 20 présente une face de contact en regard du moyen de limitation 24 et une face de guidage participant à délimiter la zone de réception 26.

Tel qu'illustré sur la figure 6 qui est une coupe réalisée dans un plan de coupe N illustré sur la figure 3, le moyen de limitation 24 vient en appui contre la face de contact de la paroi interne 20, de sorte à limiter le déplacement du dispositif de verrouillage 22 pendant son utilisation pour libérer l'adaptateur par rapport au bras 4.

Autrement dit, le moyen de limitation 24 est plus particulièrement formé par la face de butée 50 sécante à la face terminale 48 et en regard de la face de contact de la paroi interne 20. De plus, la face de butée 50 et la face de contact s'étendent chacune dans un plan parallèle à la direction longitudinale.

La face de butée 50 du moyen de limitation 24 participe à limiter l'amplitude de pivotement du dispositif de verrouillage 22. Plus précisément, lorsque le dispositif de verrouillage 22 est entraîné en pivotement autour de l'axe de pivotement P, la face de butée 50 du moyen de limitation 24 entre en contact avec la face de contact de la paroi interne 20 participant à délimiter la zone de réception 26, bloquant dès lors le pivotement du dispositif de verrouillage 22.

En d'autres termes, le moyen de limitation 24 du dispositif de verrouillage 22 bloque le pivotement du dispositif de verrouillage 22 dans au moins un sens de pivotement de ce dernier. On comprend ici que le moyen de limitation 24 permet notamment, par exemple au moyen de la butée entre la face de butée 50 du moyen de limitation 24 et la paroi interne 20, d'empêcher le dispositif de verrouillage 22 de pivoter selon un angle trop important, et limite ainsi le risque de casse d'un élément constitutif de l'adaptateur 1 et/ou du bras 4.

Selon l'invention, le dispositif de verrouillage 22 pivote autour de l'axe de pivotement P selon un angle maximum de 20° mesuré entre un plan dans lequel s'étend la face de butée 50 lorsque l'extrémité libre 76 est disposée dans le logement de réception 32 et le plan dans lequel s'étend la face de contact de la paroi interne 20.

Préférentiellement, l'angle de pivotement du dispositif de verrouillage 22 est au maximum de 15°.

Encore plus préférentiellement, l'angle de pivotement du dispositif de verrouillage 22 est au maximum de 10°.

De plus, l'adaptateur 1 comprend au moins un renfort 52 s'étendant entre la paroi interne 20 et la paroi latérale 10 et/ou la paroi supérieure 12. Le renfort 52 comprend notamment une paroi s'étendant principalement, par exemple, dans un plan sensiblement perpendiculaire à la direction longitudinale. Le renfort 52 permet de renforcer la structure de l'adaptateur 1, et d'optimiser sa rigidité.

Tel que visible sur la figure 3, le renfort 52 comprend une ouverture 54 participant à délimiter au moins en partie le logement de réception 32. On comprend que l'ouverture 54 est destinée à recevoir au moins une partie de la tige 60 du bras 4.

Par ailleurs, et tel que visible sur les figures 3 à 5, le logement de réception 32 est, en plus de l'ouverture 54 du renfort 52, au moins en partie défini par un manchon 64, et la paroi latérale 10 et/ou la paroi supérieure 12. Dans cette disposition, et tel qu'illustré plus particulièrement sur la figure 4, l'ouverture 54 du renfort 52 et le manchon 64 s'alignent le long d'une direction parallèle à la direction longitudinale L, la tige 60 du bras 4 s'étendant dès lors le long de la direction longitudinale L à travers le manchon 64 et l'ouverture 54 du renfort 52.

Selon l'invention, le logement de réception 32 est décalé latéralement par rapport à la zone de réception 26. Autrement dit, la position du logement de réception 32 est décalée par rapport à la zone de réception 26 selon la direction transversale T. La position du logement de réception 32 est également décalée par rapport à la zone de réception 26 selon la direction verticale V. Plus précisément, le logement de réception 32 est plus proche de la paroi latérale 10 que la zone de réception 26. En d'autres termes, le logement de réception 32 est disposé entre la zone de réception 26 et la paroi latérale 10. Encore plus précisément, le logement de réception 32, le bord commun 18 et la zone de réception 26 s'alignent le long d'une direction médiane, le logement de réception 32 étant disposé entre le bord commun 18 et la zone de réception 26. On peut ainsi définir que le logement de réception 32 s'étend dans un plan d'extension principale parallèle à la direction longitudinale et à la direction médiane, le plan d'extension principale étant vu dans une position médiane dudit logement de réception 32, le plan d'extension principale du logement de réception 32 coupant la zone de réception 26.

Par ailleurs, au moins une extrémité de la tige 60 prend une forme complémentaire au logement de réception 32 de l'adaptateur 1, la tige 60 présentant une encoche 62 coopérant avec le dispositif de verrouillage 22 pour bloquer longitudinalement la position de l'adaptateur 1 sur la tige 60. On comprend que l'extrémité libre 76 est disposée dans l'encoche 62 de la tige 60 de sorte à bloquer longitudinalement la tige 60 dans le logement de réception 32.

On comprend que pour déverrouiller la position de l'adaptateur 1 sur le bras 4, le dispositif de verrouillage 22 est entraîné en pivotement autour de la direction de pivotement jusqu'à ce que le moyen de limitation 24 bute contre la paroi interne 20. Ce pivotement est suffisant pour débloquer la position de l'adaptateur 1 par au bras 4 tout en limitant le risque de casse du dispositif de verrouillage 22.

## Revendications

1. Adaptateur (1) pour la fixation d'un balai d'essuyage (2) à un bras (4) d'un système d'essuyage (6), l'adaptateur (1) s'étendant le long d'une direction longitudinale (L), l'adaptateur (1) étant configuré pour être monté rotatif sur un connecteur (8) du balai d'essuyage (2) autour d'un axe de rotation (R) transversal à la direction longitudinale (L), l'adaptateur (1) comprenant au moins une paroi latérale (10) et une paroi supérieure (12), la paroi latérale (10) et la paroi supérieure (12) participant à définir un volume interne de l'adaptateur (1), l'adaptateur (1) comprenant une paroi interne (20) s'étendant au moins en partie dans le volume interne de l'adaptateur (1), l'adaptateur (1) comprenant un dispositif de verrouillage (22) destiné à solidariser longitudinalement l'adaptateur (1) par rapport au bras (4) du système d'essuyage (6), le dispositif de verrouillage (22) étant monté pivotant sur la paroi supérieure (12) autour d'un axe de pivotement (P), le dispositif de verrouillage (22) comprenant au moins un organe de poussée (28) et un organe de blocage (30), l'organe de poussée (28) s'inscrivant dans un profil de la paroi supérieure (12) tandis que l'organe de blocage (30) s'étend au moins en partie dans un logement de réception (32) destiné à recevoir le bras (4), **caractérisé en ce que** le dispositif de verrouillage comprend un moyen de limitation (24) de son pivotement qui vient en appui contre la paroi interne (20).

2. Adaptateur (1) selon la revendication précédente, dans lequel la paroi interne (20) participe à délimiter au moins en partie une zone de réception (26) destinée à recevoir le connecteur (8).

3. Adaptateur (1) selon l'une quelconque des revendications précédentes, dans lequel la paroi latérale (10) et la paroi supérieure (12) présentent chacune un bord libre (14, 16) et un bord commun (18) à la paroi latérale (10) et à la paroi supérieure (12), l'adaptateur (1) présentant une section triangulaire vue dans un plan perpendiculaire à la direction longitudinale (L) et définie par le bord libre (14) de la paroi latérale (10), le bord libre (16) de la paroi supérieure (12) et par le bord commun (18) entre la paroi latérale (10) et de la paroi supérieure (12), la paroi supérieure (12) étant courbée entre le bord commun (18) et son bord libre (16) vue dans le plan perpendiculaire à la direction longitudinale (L).

4. Adaptateur (1) selon l'une quelconque des revendications précédentes, dans lequel le dispositif de verrouillage (22) comprend au moins une charnière (34) reliant l'organe de poussée (28) à la paroi supérieure (12), l'organe de poussée (28) étant entouré par une rainure (36) le séparant de la paroi supérieure (12).

5. Adaptateur (1) selon l'une quelconque des revendications précédentes, dans lequel l'organe de poussée (28) prend une forme parallélépipédique, l'organe de poussée (28) présentant au moins un côté supérieur (38) et un côté inférieur (40) s'étendant parallèlement à la direction longitudinale (L), la charnière (34) étant disposée entre le côté inférieur (40) de l'organe de poussée (28) et la paroi supérieure (12), la rainure (36) s'étendant sur les trois autres côtés de l'organe de poussée (28).

6. Adaptateur (1) selon l'une quelconque des revendications précédentes, dans lequel l'organe de poussée (28) présente un profil courbé vu dans une coupe perpendiculaire à la direction longitudinale (L), le profil courbé de l'organe de poussée (28) s'inscrivant dans un profil de la paroi supérieure (12).

7. Adaptateur (1) selon l'une quelconque des revendications précédentes, dans lequel l'organe de poussée (28) comprend une face externe (42) orientée vers l'environnement extérieur de l'adaptateur (1) et une face interne (44) orientée vers le volume interne de l'adaptateur (1), l'organe de poussée (28) présentant sur sa face externe (42) un motif (46) favorisant l'adhérence.

8. Adaptateur (1) selon l'une quelconque des revendications précédentes, dans lequel le moyen de limitation (24) fait partie de l'organe de blocage (30).

9. Adaptateur (1) selon l'une quelconque des revendications précédentes, dans lequel l'organe de blocage (30) est délimité longitudinalement par une face terminale (48) du moyen de limitation (24).

10. Adaptateur (1) selon l'une quelconque des revendications précédentes, dans lequel le moyen de limitation (24) est formé par une face de butée (50) sécante à la face terminale (48) et en regard de la paroi interne (20).

11. Adaptateur (1) selon l'une quelconque des revendications précédentes, dans lequel le dispositif de verrouillage (22) pivote autour de l'axe de pivotement (P) selon un angle maximum de 20°.

12. Dispositif de connexion (56) pour un balai d'essuyage (2) comprenant au moins un connecteur (8) et un adaptateur (1) selon l'une quelconque des revendications précédentes, le connecteur (8) étant monté en rotation autour de l'axe de rotation au moyen d'un dispositif de rotation (58).

13. Balai d'essuyage (2) comprenant au moins un dispositif de connexion (56) selon la revendication précédente ou un adaptateur (1) selon l'une quelconque des revendications 1 à 11.

14. Système d'essuyage (6) comprenant au moins un bras (4) et un balai d'essuyage (2) selon la revendication précédente en combinaison avec la revendication 1, le bras (4) comprenant au moins une tige (60) se logeant dans le logement de réception (32) de l'adaptateur (1).

## Patentansprüche

1. Adapter (1) zur Befestigung eines Scheibenwischers (2) an einem Arm (4) eines Scheibenwischersystems (6), wobei sich der Adapter (1) in einer Längsrichtung (L) erstreckt, wobei der Adapter (1) so konfiguriert ist, dass er auf einem Verbindungsstück (8) des Scheibenwischers (2) um eine quer zur Längsrichtung (L) verlaufende Drehachse (R) drehbar montiert wird, der Adapter (1) mindestens eine Seitenwand (10) und eine obere Wand (12) umfasst, wobei die Seitenwand (10) und die obere Wand (12) dazu beitragen, ein Innenvolumen des Adapters (1) zu definieren, wobei der Adapter (1) eine Innenwand (20) umfasst, die sich zumindest teilweise in das Innenvolumen des Adapters (1) erstreckt, der Adapter (1) eine Verriegelungsvorrichtung (22) umfasst, die dazu bestimmt ist, den Adapter (1) in Bezug auf den Arm (4) des Scheibenwischersystems (6) in Längsrichtung zu verriegeln, wobei die Verriegelungsvorrichtung (22) an der oberen Wand (12) um eine Schwenkachse (P) schwenkbar angebracht ist, wobei die Verriegelungsvorrichtung (22) mindestens ein Schuborgan (28) und ein Blockierorgan (30) umfasst, wobei die Schubeinheit (28) in ein Profil der oberen Wand (12) integriert ist, während die Blockiereinheit (30) sich zumindest teilweise in eine Aufnahme (32) erstreckt, die dazu bestimmt ist, den Arm (4) aufzunehmen, **dadurch gekennzeichnet, dass** die Verriegelungsvorrichtung ein Mittel (24) zur Begrenzung ihrer Drehung umfasst, das sich an der Innenwand (20) abstützt.

2. Adapter (1) nach dem vorhergehenden Anspruch, wobei die Innenwand (20) zumindest teilweise an der Begrenzung eines Aufnahmebereichs (26) beteiligt ist, der zur Aufnahme des Verbinders (8) ausgebildet ist.

3. Adapter (1) nach einem der vorhergehenden Ansprüche, wobei die Seitenwand (10) und die obere Wand (12) jeweils eine freie Kante (14, 16) und eine Kante (18) aufweisen, die der Seitenwand (10) und der oberen Wand (12) gemeinsam ist, wobei der Adapter (1) einen dreieckigen Querschnitt in einer Ebene senkrecht zur Längsrichtung (L) gesehen aufweist, und durch die freie Kante (14) der Seitenwand (10), die freie Kante (16) der oberen Wand (12) und durch die gemeinsame Kante (18) zwischen der Seitenwand (10) und der oberen Wand (12) definiert ist, wobei die obere Wand (12) zwischen der gemeinsamen Kante (18) und ihrer freien Kante (16), gesehen in der Ebene senkrecht zur Längsrichtung (L), gekrümmt ist.

4. Adapter (1) nach einem der vorhergehenden Ansprüche, wobei die Verriegelungsvorrichtung (22) mindestens ein Scharnier (34) aufweist, das die Schubeinheit (28) mit der oberen Wand (12) verbindet, wobei die Schubeinheit (28) von einer Nut (36) umgeben ist, die sie von der oberen Wand (12) trennt.

5. Adapter (1) nach einem der vorhergehenden Ansprüche, wobei die Schubeinheit (28) eine Parallelepipedform aufweist, wobei die Schubeinheit (28) mindestens eine Oberseite (38) und eine Unterseite (40) aufweist, die sich parallel zur Längsrichtung (L) erstrecken, wobei das Scharnier (34) zwischen der Unterseite (40) der Schubeinheit (28) und der oberen Wand (12) angeordnet ist, wobei sich die Nut (36) über die drei anderen Seiten der Schubeinheit (28) erstreckt.

6. Adapter (1) nach einem der vorhergehenden Ansprüche, wobei die Schubeinheit (28) im Querschnitt senkrecht zur Längsrichtung (L) gesehen ein gekrümmtes Profil aufweist, wobei das gekrümmte Profil der Schubeinheit (28) in ein Profil der oberen Wand (12) integriert ist.

7. Adapter (1) nach einem der vorhergehenden Ansprüche, wobei die Druckeinheit (28) eine Außenfläche (42), die auf die äußere Umgebung des Adapters (1) ausgerichtet ist, und eine Innenfläche (44) aufweist, die auf das Innenvolumen des Adapters (1) ausgerichtet ist, wobei die Druckeinheit (28) auf ihrer Außenfläche (42) ein Muster (46) aufweist, das die Haftung unterstützt.

8. Adapter (1) nach einem der vorhergehenden Ansprüche, wobei das Mittel (24) zur Begrenzung Teil der Blockiereinheit (30) ist.

9. Adapter (1) nach einem der vorhergehenden Ansprüche, wobei die Blockiereinheit (30) in Längsrichtung durch eine Endfläche (48) des Begrenzungsmittels (24) begrenzt ist.

10. Adapter (1) nach einem der vorhergehenden Ansprüche, wobei das Mittel (24) zur Begrenzung durch eine die Stirnfläche (48) schneidende, der Innenwand (20) zugewandte Anschlagfläche (50) gebildet ist.

11. Adapter (1) nach einem der vorhergehenden Ansprüche, wobei die Verriegelungsvorrichtung (22) um die Schwenkachse (P) um einen Winkel von maximal 20° schwenkt.

12. Anschlussvorrichtung (56) für einen Scheibenwischer (2) mit mindestens einem Verbinder (8) und einem Adapter (1) nach einem der vorhergehenden Ansprüche, wobei der Verbinder (8) mittels einer Drehvorrichtung (58) drehbar um die Drehachse angebracht ist.

13. Abstreifer (2) mit mindestens einer Anschlussvorrichtung (56) nach dem vorhergehenden Anspruch oder einem Adapter (1) nach einem der Ansprüche 1 bis 11.

14. Wischanlage (6) mit mindestens einem Arm (4) und einem Wischer (2) nach dem vorhergehenden Anspruch in Verbindung mit Anspruch 1, wobei der Arm (4) mindestens eine Stange (60) aufweist, die in der Aufnahme (32) des Adapters (1) untergebracht ist.

## Claims

1. Adapter (1) for securing a wiper (2) on an arm (4) of a wiper system (6), the adapter (1) extending in a longitudinal direction (L), the adapter (1) being configured to be fitted such as to rotate on a connector (8) of the wiper (2) around an axis of rotation (R) transverse to the longitudinal direction (L), the adapter (1) comprising at least one lateral wall (10) and one upper wall (12), the lateral wall (10) and the upper wall (12) participating in defining an inner volume of the adapter (1), the adapter (1) comprising an inner wall (20) extending at least partly into the inner volume of the adapter (1), the adapter (1) comprising a locking device (22) which is designed to render the adapter (1) integral longitudinally relative to the arm (4) of the wiper system (6), the locking device (22) being fitted such as to pivot on the upper wall (12) around an axis of pivoting (P), the locking device (22) comprising at least one thrust unit (28) and one blocking unit (30), the thrust unit (28) being incorporated in a profile of the upper wall (12), whereas the blocking unit (30) extends at least partly into a receipt receptacle (32) which is intended to receive the arm (4), **characterized in that** the locking device comprises a means (24) for limiting the pivoting thereof which means is supported against the inner wall (20).

2. Adapter (1) according to the preceding claim, wherein the inner wall (20) participates in delimiting at least partly a receipt area (26) which is designed to receive the connector (8).

3. Adapter (1) according to either of the preceding claims, wherein the lateral wall (10) and the upper wall (12) each have a free edge (14, 16) and an edge (18) which is common to the lateral wall (10) and to the upper wall (12), the adapter (1) having a triangular cross-section seen on a plane perpendicular to the longitudinal direction (L), and defined by the free edge (14) of the lateral wall (10), the free edge (16) of the upper wall (12), and by the common edge (18) between the lateral wall (10) and the upper wall (12), the upper wall (12) being curved between the common edge (18) and its free edge (16) seen on the plane perpendicular to the longitudinal direction (L).

4. Adapter (1) according to any one of the preceding claims, wherein the locking device (22) comprises at least one hinge (34) which connects the thrust unit (28) to the upper wall (12), the thrust unit (28) being surrounded by a groove (36) which separates it from the upper wall (12).

5. Adapter (1) according to any one of the preceding claims, wherein the thrust unit (28) has a parallelepiped form, the thrust unit (28) having at least one upper side (38) and one lower side (40) extending parallel to the longitudinal direction (L), the hinge (34) being positioned between the lower side (40) of the thrust unit (28) and the upper wall (12), the groove (36) extending over the three other sides of the thrust unit (28).

6. Adapter (1) according to any one of the preceding claims, wherein the thrust unit (28) has a curved profile seen in cross-section perpendicular to the longitudinal direction (L), the curved profile of the thrust unit (28) being incorporated in a profile of the upper wall (12).

7. Adapter (1) according to any one of the preceding claims, wherein the thrust unit (28) comprises an outer face (42) which is oriented towards the outer environment of the adapter (1), and an inner face (44) which is oriented towards the inner volume of the adapter (1), the thrust unit (28) having on its outer face (42) a pattern (46) which assists the adhesion.

8. Adapter (1) according to to any one of the preceding claims, wherein the means (24) for limiting forms part of the blocking unit (30).

9. Adapter (1) according to to any one of the preceding claims, wherein the blocking unit (30) is delimited longitudinally by an end face (48) of the means (24) for limiting.

10. Adapter (1) according to any one of the preceding claims, wherein the means (24) for limiting is formed by a stop face (50) which intersects the end face (48) and faces the inner wall (20).

11. Adapter (1) according to any one of the preceding claims, wherein the locking device (22) pivots around the axis of pivoting (P) according to a maximum angle of 20°.

12. Connection device (56) for a wiper (2) comprising at least one connector (8) and one adapter (1) according to any one of the preceding claims, the connector (8) being fitted such as to rotate around the axis of rotation by means of a rotation device (58).

13. Wiper (2) comprising at least one connection device (56) according to the preceding claim, or an adapter (1) according to any one of claims 1 to 11.

14. Wiper system (6) comprising at least one arm (4) and one wiper (2) according to the preceding claim in combination with claim 1, the arm (4) comprising at least one rod (60) which is accommodated in the receipt receptacle (32) of the adapter (1).
